# EUROPEAN PATENT APPLICATION

(11) **EP 2 237 125 A1**
(43) Date of publication of application: **06.10.2010**
(21) Application number: 09004655.8
(22) Date of filing: 31.03.2009
(51) Int. Cl.: G05B 23/02

(54) **Method of monitoring an analyser connected to a communications network in an industrial automation system and industrial automation system**

(71) Applicant: Siemens Aktiengesellschaft, 80333 München (DE)
(72) Inventor: Marke, Matthias, 76185 Karlsruhe (DE); Rice, Michael, Tulsa, OK 74137 (US); Shepherd, Ray, Tulsa, OK 74137 (US); Wang, Aosheng, Eden Prairies, MN 55344 (US)

(57) **Abstract**

In an industrial automation system comprising a plurality of analysers connected to a communications network, at least one analyser is configured to broadcast a status message (106,107,108) comprising identity information and status information associated with the analyser across the communications network (109) in predetermined time intervals. A configuration application (124) for configuring analysers associated with the industrial automation system is provided. Further, a monitoring service (125) for collecting broadcast status messages (106,107,108) is provided. The monitoring service (125) runs as a background process independent from the configuration application (124). Moreover, the monitoring service (125) is configured to maintain a list of analysers in the industrial automation system based on broadcast status messages (106,107,108). The configuration application (124) is configured to retrieve status information associated with the analysers from the monitoring service only.

## Description

The present invention relates to a method of monitoring an analyser connected to a communications network in an industrial automation system. Furthermore, the present invention relates to an industrial automation system.

Communication in industrial automations systems is characterised by a large amount of relatively short messages. This requires high efforts to ensure data integrity and consistent system operation. Further efforts result from real-time requirements in industrial automation systems when collecting and processing measured data and control messages pertaining to a time-critical technical process, e.g. in factory or building automation.

Methods of safeguarding configurable components of an industrial automation system, such as monitoring devices, open-loop and closed-loop control devices, sensors and actuators, against unauthorised access gain in importance. Compared to other fields of technology, data integrity is extremely important for a stable and reliable operation of industrial automation systems. Especially when collecting, evaluating and transmitting measured data and control commands, care has to be taken to ensure that measured data and control commands are transmitted completely and without any manipulation. Therefore, intentional and unintentional modifications of control messages in industrial automation systems are to be avoided, especially in system or component failure scenarios.

Analysers of an industrial automation system, such as gas chromatographs, are usually connected to an industrial communication network and broadcast status messages on their identity and status across the network using a connectionless communications protocol. According to traditional approaches, in order to minimise network traffic, timers are provided to extend the time between two broadcasts to several minutes. A computer providing a configuration application may be able to collect and display status messages for managing operation of industrial analysers. However, due to above time interval between two broadcasts, several minutes may pass by after starting the configuration application until a sufficient number of status messages is collected for executing configuration tasks requiring current and precise status information. This problem can be solved by establishing a connection to each analyser known from previous sessions of the configuration application. Indeed, this may also be time consuming. Besides, connection information for analysers not known from previous sessions has to be entered manually.

It is therefore an object of the present invention is to provide an efficient and reliable method of monitoring an analyser of an industrial automation system.

This object and other objects are solved by the features of the independent claims. Preferred embodiments of the invention are described by the features of the dependent claims.

One aspect of the present invention relates to a method of monitoring an analyser connected to a communications network in an industrial automation system. At least one of a plurality of analysers is configured to broadcast a status message comprising identity information and status information associated with the analyser across the communications network in predetermined time intervals. A configuration application for configuring analysers associated with the industrial automation system is provided and runs on at least one computer in the industrial automation system. Moreover, a monitoring service for collecting broadcast status messages is provided. The monitoring service runs as a background process independent from the configuration application on the at least one computer. Besides, the monitoring service is configured to start upon booting the at least one computer and to maintain a list of analysers in the industrial automation system based on broadcast status messages. The list of analysers also comprises status information associated with the analysers. Further, the configuration application is configured to retrieve status information associated with the analysers from the monitoring service only. Thus, delays caused by establishing a connection between analyser and configuration application are eliminated and no user interaction is needed for obtaining status information when using analysers that have not been used in a previous session of the configuration application.

According to an embodiment of the present invention, the monitoring service is provided to a plurality of computers providing configuration applications by one dedicated server in the industrial automation system. This additionally improves the availability of the monitoring service. Preferably, the dedicated server is configured to be permanently operated and connected to the communications network.

According to a further embodiment of the present invention, wherein the status messages are broadcast using UDP (user datagram protocol). This results in a simplified implementation of the present invention.

The monitoring service may be a Windows Service capable of handling start, stop and/or pause messages from a Service Control Manager. Alternatively, the monitoring service may be a daemon, e.g. known from Unix or comparable multitasking operation systems. This eases an integration of the present invention into existing software architectures.

According to a still further embodiment of the present invention, the monitoring service is provided within a service-oriented architecture. A service-oriented architecture provides methods for systems integration and enables structuring large applications as an ad hoc collection of smaller modules which implement interoperable services. Service-orientation aims at a rather loose coupling of services with operating systems, programming languages and other technologies which underlie applications. Besides, service-orientation further aims at making coupled services usable by authorised users or services. Moreover, service-oriented architectures enable application integration by hiding complexity of individual components of an industrial automation system behind standardised interfaces. This results in a secure and flexible provisioning of control and monitoring functionality in industrial automation systems, thereby improving total system-quality.

A further aspect of the present invention relates to an industrial automation system comprising a plurality of analysers. The analysers are configured to broadcast a status message comprising identity information and status information associated with the respective analyser across the communications network in predetermined time intervals. Besides, the industrial automation system also comprises at least one computer for providing a monitoring service for collecting broadcast status messages. The monitoring service runs as a background process independent from a configuration application for configuring analysers. Further, the monitoring service is configured to start upon booting the at least one computer and to maintain a list of analysers in the industrial automation system based on broadcast status messages. The list of analysers comprises status information associated with the analysers. Moreover, the industrial automation system encompasses at least one computer for providing the configuration application. The configuration application is configured to retrieve status information associated with the analysers from the monitoring service only.

These and other aspects of the present invention will be apparent from and elucidated with reference to the embodiments thereafter. It should be noted that the use of reference signs shall not be construed as limiting the scope of the invention.
- Figure 1: shows a schematic diagram of an industrial automation system according to an embodiment of the present invention.
- Figure 2: shows a flow chart of a method according to an embodiment of the present invention.

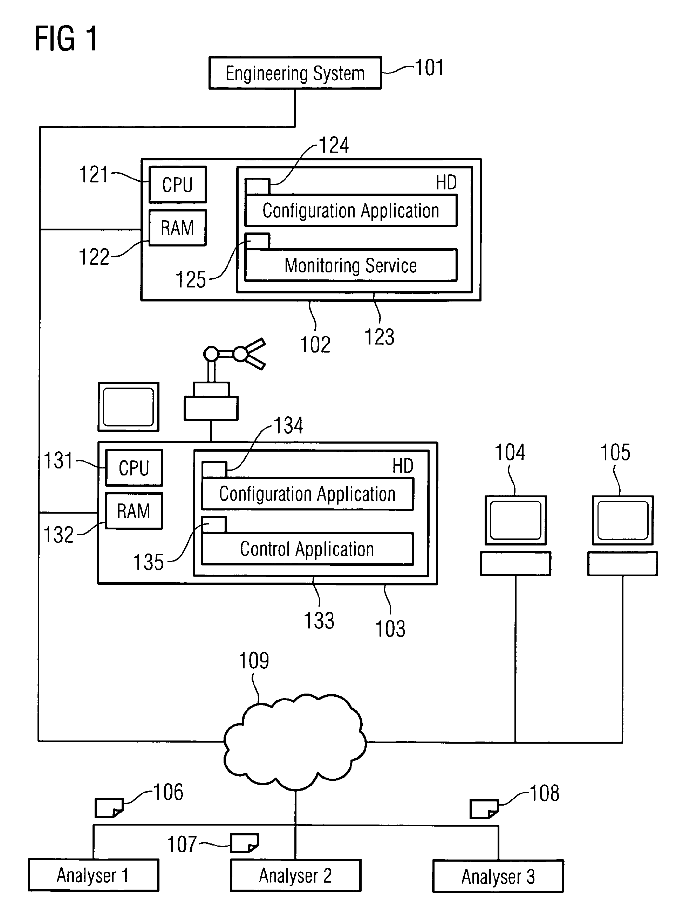

The industrial automation system depicted in figure 1 comprises an engineering system 101, a server 102, a plurality of programmable industrial control devices 103-105 and a plurality of analysers 106-108 which are connected to an industrial communications network 109. The industrial control devices 103-105 provide control and supervision functions as local services of the industrial automation system for managing industrial processes. Industrial processes include e.g. those of manufacturing, production, power generation, fabrication and refining and may run in continuous, batch, repetitive or discrete modes.

The analysers 106-108 are configured to broadcast status messages 161, 171, 181 comprising identity information and status information associated with the analysers 106-108 across the communications network 109 in predetermined time intervals. In order to reduce network traffic, the time intervals are set to several minutes.

The engineering system 101 is designed to plan and execute configuration, maintenance, commissioning and documentation tasks within the industrial automation system. Particularly, the engineering system 101 provides configuration data to the industrial control devices 103-105. The configuration data comprises information on allocation of local services to industrial control devices 103-105 and information on dependencies between local services.

Both the server 102 and the industrial control devices 103-105 each comprise at least a processor 121, 131 for executing program code and a storage device 123, 133 for persistently storing program code, application data and user data. The storage device 123 of the server 102 comprises program code 124 for providing a configuration application and program code 125 for implementing a monitoring service. The analysers 106-108 associated with the industrial automation system shown in figure 1 are configured by means of the configuration application running on the server 102. The monitoring service collects broadcast status messages 161, 171, 181 and runs as a background process independent from the configuration application. In particular, the monitoring service is configured to start upon booting the server 102 and to maintain a list of analysers 106-108 in the industrial automation system based on broadcast status messages 161, 171, 181. The list of analysers further comprises status information associated with the analysers 106-108. Moreover, the monitoring service is also provided to the industrial control devices 103-105 by the server 102 acting as a dedicated server for providing the monitoring service. Further, the server 102 is configured to be permanently operated and connected to the communications network 109.

The storage device 133 of the industrial control device 103 comprises program code 134 for providing a configuration application interacting with the monitoring service and program code 135 for implementing a control application. According to the present embodiment, the control application serves to control and monitor sensors and actuators as peripheral devices connected to the industrial control device 103. Sensors and actuators may also be combined in a device such as a robot. According to the present embodiment, the control application implements a supervisory system for presenting industrial process data to a human operator. Thus, the human operator is enabled to monitor and control the underlying industrial process. Further, the supervisory system aggregates and processes data on the industrial process collected by sensors connected to the industrial control devices 103-105 or by the analysers 106-108 and sends process control commands to actuators coupled to the underlying industrial process and associated with the industrial control devices 103-105.

Moreover, an industrial control device 103-105 may be designed and configured to monitor and control the volumetric current, pressure or temperature of a streaming liquid in an industrial process. In such a case, a supervisory system allows a human operator to change set points for the streaming liquid and to set alarm thresholds for monitoring and managing critical events.

The configuration application provided by the industrial control device 103 also aims at configuring the analysers 106-108. Each of the configuration applications running on the server 102 and on the industrial control devices 103-105 is configured to retrieve status information associated with the analysers 106-108 from the monitoring service only. By doing so, status messages 161, 171, 181 are not collected by temporarily running configuration applications, but by a permanently running service providing up-to-date status information.

The program code 124, 125, 134, 135 is loadable into a random-access memory 122, 132 of the client computer 102 and the industrial control device 103, respectively. Then the program code 124, 125, 134, 135 can be executed by the processors 121, 131 to cause the executing of at least above-mentioned steps.

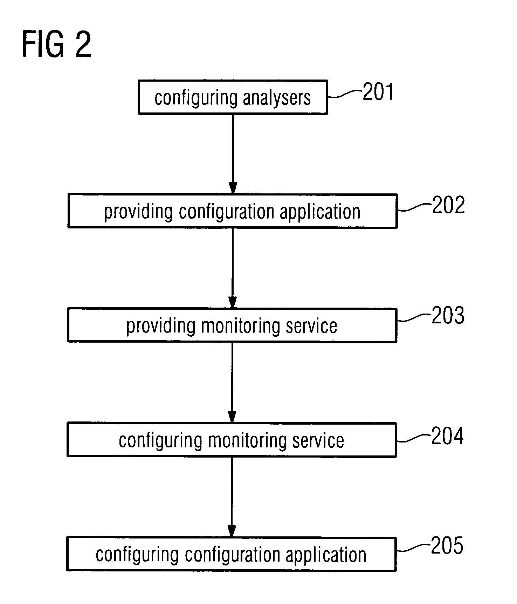

Turning to the flow chart according to figure 2, in the industrial automation system comprising the analysers 106-108 connected to the communications network 109, the analysers 106-108 are configured to broadcast above-mentioned status messages 161, 171, 181 across the communications network 109 (step 201). According to step 202, at least one configuration application for configuring the analysers 106-108 is provided. Further, the monitoring service for collecting broadcast status messages 161, 171, 181 is provided by the server 102 (step 203). Moreover, the monitoring service is configured to maintain a list of the analysers 106-108 based on broadcast status messages 161, 171, 181 (step 204). The configuration application is configured to retrieve status information associated with the analysers 106-108 from the monitoring service only instead of collecting status information on their own (step 205). The order of above-mentioned steps is not fixed and may be varied according to individual application requirements.

Scope and applicability of the present invention are not limited to the described embodiments of the present invention. Modifications of the present invention are known to one skilled in the art without departing from the scope of the present invention.

## Claims

1. Method of monitoring an analyser connected to a communications network in an industrial automation system, the method comprising the steps of:
- configuring at least one of a plurality of analysers to broadcast a status message comprising identity information and status information associated with the analyser across the communications network in predetermined time intervals,
- providing a configuration application for configuring analysers associated with the industrial automation system, the configuration application running on at least one computer in the industrial automation system,
- providing a monitoring service for collecting broadcast status messages, the monitoring service running as a background process independent from the configuration application on the at least one computer,
- configuring the monitoring service to start upon booting the at least one computer and to maintain a list of analysers in the industrial automation system based on broadcast status messages, the list of analysers further comprising status information associated with the analysers,
- configuring the configuration application to retrieve status information associated with the analysers from the monitoring service only.

2. Method according to claim 1,
wherein the monitoring service is provided to a plurality of computers providing configuration applications by one dedicated server in the industrial automation system.

3. Method according to claim 2,
wherein the dedicated server is configured to be permanently operated and connected to the communications network.

4. Method according to one of the preceding claims,
wherein the status messages are broadcast using UDP.

5. Method according to one of the preceding claims,
wherein the monitoring service is a Windows Service capable of handling start, stop and/or pause messages from a Service Control Manager.

6. Method according to one of the claims 1 to 4,
wherein the monitoring service is a daemon.

7. Method according to one of the preceding claims,
wherein the monitoring service is provided within a service-oriented architecture.

8. Industrial automation system comprising
- a plurality of analysers being configured to broadcast a status message comprising identity information and status information associated with the respective analyser across the communications network in predetermined time intervals,
- at least one computer for providing a monitoring service for collecting broadcast status messages, the monitoring service running as a background process independent from a configuration application for configuring analysers, the monitoring service further being configured to start upon booting the at least one computer and to maintain a list of analysers in the industrial automation system based on broadcast status messages, the list of analysers further comprising status information associated with the analysers,
- at least one computer for providing the configuration application for configuring analysers associated with the industrial automation system, configuration application being configured to retrieve status information associated with the analysers from the monitoring service only.
